# EUROPÄISCHE PATENTSCHRIFT

(11) **EP 3 341 706 B1**
(45) Veröffentlichungstag und Bekanntmachung des Hinweises auf die Patenterteilung: **05.05.2021**
(21) Anmeldenummer: 15762937.9
(22) Anmeldetag: 26.08.2015
(51) Int. Cl.: G01N 21/552, G01N 21/77, G01N 31/22, G01N 21/17

(54) **OPTISCHER QUECKSILBERDETEKTOR UND QUECKSILBER-DETEKTORELEMENT**
OPTICAL MERCURY DETECTOR AND MERCURY DETECTOR ELEMENT
DÉTECTEUR OPTIQUE DE MERCURE ET ÉLÉMENT DE DÉTECTEUR DE MERCURE

(43) Veröffentlichungstag der Anmeldung: 04.07.2018
(73) Patentinhaber: Gottfried Wilhelm Leibniz Universität Hannover, 30167 Hannover (DE)
(72) Erfinder: ZIMMERMANN, Stefan, 30938 Burgwedel (DE); REITHMEIER, Eduard, 30179 Hannover (DE); ROTH, Bernhard, 33719 Bielefeld (DE); BREMER, Kort, 30419 Hannover (DE)
(74) Vertreter: Gramm, Lins & Partner Patent- und Rechtsanwälte PartGmbB
(86) Internationale Anmeldenummer: PCT/EP2015/069531
(87) Internationale Veröffentlichungsnummer: WO 2017/032416

(56) Entgegenhaltungen:
- EP-A1- 2 270 478
- US-A1- 2003 092 034
- US-A1- 2007 116 401
- US-A1- 2011 139 970
- US-A1- 2014 333 933

## Beschreibung

Die Erfindung betrifft einen optischen Quecksilberdetektor gemäß dem Oberbegriff von Anspruch 1 und ein Quecksilber-Detektorelement gemäß dem Oberbegriff von Anspruch 9. Quecksilber ist eines der toxischsten Elemente für Mensch und Umwelt. Von den drei häufigsten Formen von Quecksilber ist das zweiwertige Quecksilber besonders toxisch, da es mit einer Methylgruppe zu Methylquecksilber reagiert. In einer Vielzahl von Industrie-Prozessen, beispielsweise in der ÖI- und Erdgasförderung sowie in der Zementproduktion, in Kohlekraftwerken und bei Müllverbrennungsanlagen tritt Quecksilber als unerwünschte Begleiterscheinung auf. Insbesondere im Bereich des Arbeitsschutzes und bei der Wartung sowie Überwachung von Industrieanlagen besteht ein Bedarf an kostengünstigen und kontinuierlich bzw. quasi kontinuierlich messenden Sensoren zur Überwachung der Quecksilberkonzentration in der Luft. Bisher bekannte Quecksilberdetektoren sind vergleichsweise aufwändig herzustellen und/oder zu bedienen.

Die US 2014/0333933 A1 und die EP 2 270 478 A1 betreffen einen optischen Quecksilberdetektor gemäß dem Oberbegriff des Anspruches 1. Derartige Quecksilberdetektoren können bereits geringe Quecksilberkonzentrationen messen. Es ist jedoch wünschenswert, die Empfindlichkeit weiter zu steigern. Die US 2011/0139970 A1 betrifft ein System zur Detektion eines Objektes mit einem Photodetektor, der Licht von einem Flüstergalerieresonator empfängt. Ein mit dem Photodetektor gekoppelter Prozessor erstellt ein Transmissionsspektrum auf Basis des empfangenen Lichtes, ermittelt eine erste und zweite Mode innerhalb des Transmissionsspektrums und bestimmt anhand dessen, ob sich ein Objekt in der Nähe des Flüstergalerieresonators befindet.

Die US 2003/0092034 A1 betrifft einen Biochip, bei dem Löcher in einem Substrat ausgebildet sind, die sich mit einem zu vermessenden Fluid füllen, wobei der Biochip als Chelator von Quecksilber dienen kann.

Die US 2007/0116401 A1 betrifft ein System und ein Verfahren zum Überwachen von Betriebszuständen einer Stromerzeugungsanlage. Das System umfasst einen Lichtwellenleiter, der sich zumindest in einem Bereich der Stromerzeugungsanlage erstreckt, eine Reihe von multifunktionalen Sensormodulen, eine breitbandige Lichtquelle und einen Optokuppler.

Der Erfindung liegt die Aufgabe zugrunde, die Messung der Quecksilberkonzentration in der Luft zu verbessern und die Empfindlichkeit der Messung zu erhöhen.

Die Erfindung löst das Problem durch einen optischen Quecksilberdetektor mit den Merkmalen von Anspruch 1 und ein Quecksilber-Detektorelement für einen optischen Quecksilberdetektor mit den Merkmalen von Anspruch 9.

Unter einem linearen Wellenleiter wird dabei ein Wellenleiter verstanden, bei dem die Ausdehnung in zwei Raumrichtungen deutlich kleiner ist als in die dritte verbleibende Raumrichtung. Beispielsweise ist die Ausdehnung in der dritten Raumrichtung zumindest hundertfach größer als die Ausdehnung in den beiden anderen Raumrichtungen. In anderen Worten ist eine lineare Wellenleitstruktur vorzugsweise faserförmig. Es ist dabei möglich, nicht aber notwendig, dass es sich bei dem linearen Wellenleiter um eine Wellenleitfaser handelt. Vielmehr ist es auch möglich, dass die Wellenleitstruktur in ein flächiges Substrat eingebracht ist, beispielsweise dadurch, dass der Brechungsindex in dem Substrat lokal geändert ist.

Reagiert das Beschichtungsmaterial zum Reaktionsprodukt, so ändert sich der optische Weg des Arms, in dessen Umgebung das Beschichtungsmaterial angeordnet ist. Die Änderung der optischen Weglänge wird vom Detektorelement gemessen.

Gemäß einer bevorzugten Ausführungsform ist die Heizvorrichtung eingerichtet zum automatischen Durchführen einer Temperaturmodulation, beispielsweise mittels Pulsweitenmodulation. Die Auswerteeinheit ist in diesem Fall ausgebildet zum Berechnen des zeitlichen Mittelwerts der Eigenschaft des Lichtes und zum Berechnen der Quecksilberkonzentration aus diesem Mittelwert. Beispielsweise wird die Temperatur der Beschichtung in vorgegebenen Zeitintervallen so weit erhöht, dass zumindest ein Teil des Quecksilbers verdampft. Das Zeitintervall kann kleiner sein als 5 Minuten und länger als 5 Sekunden. Durch die Temperaturmodulation stellt sich eine mittlere Amalgamkonzentration ein, aus der auf die Quecksilberkonzentration der Atmosphäre geschlossen werden kann.

Vorteilhaft an dem erfindungsgemäßen optischen Quecksilberdetektor ist, dass er quasi kontinuierlich betreibbar ist. Hat das Beschichtungsmaterial zu einem so großen Anteil zum Reaktionspunkt reagiert, dass der Quecksilberdetektor nicht mehr spezifikationsgemäß funktioniert, so kann durch Heizen mittels der Heizvorrichtung die Reaktion des Reaktionsprodukts zum Beschichtungsmaterial ausgelöst werden. Daraufhin liegt das Beschichtungsmaterial in seiner ursprünglichen Form vor, es ist in anderen Worten regeneriert.

Ein weiterer Vorteil des erfindungsgemäßen Quecksilberdetektors ist, dass er einfach herzustellen ist. Vorteilhafterweise kann der Quecksilberdetektor zudem als integrierter Sensor aufgebaut sein, das heißt, dass sämtliche Komponenten des Quecksilberdetektors auf einem gemeinsamen Träger, insbesondere einer gemeinsamen Platine, untergebracht sein können. Das ermöglicht es, den Quecksilberdetektor beispielsweise zusammen mit anderen Sensoren in einem Messgerät zu integrieren.

Im Rahmen der vorliegenden Beschreibung wird unter der Lichtquelle insbesondere ein Laser, eine Laserdiode, eine Leuchtdiode oder eine Superlumineszenzdiode verstanden. Es ist möglich und stellt eine bevorzugte Ausführungsform dar, dass die Lichtquelle zum Aussenden von Licht mit zwei, drei oder mehr unterscheidbaren Wellenlängen ausgebildet ist. Insbesondere kann die Lichtquelle zwei oder mehr Laser umfassen.

Unter der Wellenleitstruktur wird insbesondere eine Vorrichtung verstanden, die so ausgebildet ist, dass sie das Licht entlang eines vorgegebenen Pfades durch feste Materie leitet. Die Wellenleiterstruktur kann sowohl planar-optisch als auch faseroptisch ausbildet sein.

Unter dem Detektorelement wird insbesondere eine Vorrichtung verstanden, mittels der eine Lichtintensität und/oder eine spektrale Leistungsdichte in einem vorgegebenen Wellenlängen-Intervall ermittelbar ist. Das Detektorelement kann also insbesondere ein Spektrometer sein. Vorzugsweise ist das Detektorelement ein, gegebenenfalls frequenzselektiver, Intensitätsmesser. Anhand der frequenzabhängigen Intensitätsänderung kann auf die zeitabhängige Verschiebung einer Resonatorfrequenz der Wellenleitstruktur, insbesondere eines Resonators der Wellenleitstruktur, geschlossen und daraus die Quecksilberkonzentration berechnet werden.

Unter dem Merkmal, dass die Wellenleitstruktur so ausgebildet ist, dass sich das in der Wellenleitstruktur geleitete Licht in der Eigenschaft verändert, wenn Quecksilber mit dem Beschichtungsmaterial reagiert, wird beispielsweise verstanden, dass sich der Brechungsindex des Beschichtungsmaterials ändert. Dadurch kann sich beispielsweise die Resonatorfrequenz eines Resonators ändern, was detektiert wird. Unter der Eigenschaft wird insbesondere eine Intensität oder eine spektrale Leistungsdichte verstanden.

Unter der Heizvorrichtung wird insbesondere eine Vorrichtung verstanden, mittels der die Beschichtung auf eine Temperatur von zumindest 120 °C, insbesondere zumindest 200 °C, erhitzbar ist. Vorzugsweise ist die Heizvorrichtung ausgebildet zum Erwärmen der Beschichtung auf zumindest 600°C. Beispielsweise umfasst die Heizvorrichtung eine Lichtquelle, die eingerichtet ist zum Aussenden von Licht einer Wellenlänge, bei der das Beschichtungsmaterial eine so große Absorption aufweist, dass die angegebene Temperatur erreichbar ist.

Es ist möglich und stellt eine bevorzugte Ausführungsform dar, dass die Lichtquelle zum Abgeben des Lichts in der Wellenleitstruktur angeordnet ist. Das Licht wird dann mittels der Wellenleitstruktur zur Beschichtung und/oder dem Reaktionsprodukt geleitet, wo es die Reaktion des Reaktionsprodukts zum Beschichtungsmaterial bewirkt. Alternativ ist die Lichtquelle so angeordnet, dass sie die Beschichtung in Form eines Auflichts ausleuchtet.

Das Beschichtungsmaterial umfasst Gold. Zusätzlich kann das Beschichtungsmaterial beispielsweise 1,6-Hexanedithiol aufweisen. Unter Quecksilber werden insbesondere elementares Quecksilber und/oder Quecksilberbindungen verstanden, die bei Standardbedingungen (22°C, 1013 hPa) flüssig oder gasförmig sind.

Das Beschichtungsmaterial umfasst Gold-Nanopartikel in Form von Gold-Nanoantennen, die so angeordnet sind, dass ihr mittlerer Abstand durch Spektroskopie im Infrarotbereich ermittelbar ist. Es ist zudem möglich, Gold-Nanoantennen als Beschichtungsmaterial zu verwenden, deren Ausdehnung in zwei Raumrichtungen kleiner, insbesondere zumindest um den Faktor 10, ist als in der dritten, verbleibenden Raumrichtung. Eine Schichtdicke der Beschichtung beträgt vorzugsweise 5 nm bis 50 nm, bevorzugt 5 nm bis 20 nm.

Vorzugsweise umfasst die Heizvorrichtung eine Lichtquelle, die ausgebildet ist zum Aussenden von Licht, das vom Beschichtungsmaterial absorbierbar ist. Beispielweise handelt es sich bei der Lichtquelle um eine UV-Lichtquelle, was besonders vorteilhaft ist, wenn die Beschichtung Gold-Nanopartikel aufweist. Alternativ oder zusätzlich umfasst die Heizvorrichtung eine Infrarot-Lichtquelle, mittels deren Strahlung das Beschichtungsmaterial durch Absorption erhitzbar ist.

Alternativ oder zusätzlich umfasst die Heizvorrichtung ein ohmsches Heizelement, insbesondere ein elektrisches Widerstandselement, das in thermischem Kontakt mit der Wellenleitstruktur steht. Das Heizelement kann aus Metall, Halbleiter und/ oder Keramik gebildet sein. Vorzugsweise ist das Heizelement mit einer Auswerteeinheit verbunden, die eingerichtet ist zum Bestimmen der Temperatur aus dem elektrischen Widerstand des Heizelements. Bei dem Heizelement kann es sich um eine Schicht handeln, wobei die Beschichtung auf der Wellenleitstruktur aufgebracht sein kann. Vorzugsweise ist die Auswerteeinheit ausgebildet zum Berechnen der Quecksilberkonzentration aus einer zeitabhängigen Verschiebung der Resonatorfrequenz eines Resonators der Wellenleitstruktur.

Alternativ kann die Heizvorrichtung einen elektrischen oder optischen Temperatursensor aufweisen, mittels dem die Heizleistung der Heizvorrichtung mithilfe einer Ansteuereinheit auf eine vorgegebene Temperatur geregelt wird.

Günstig ist es, wenn die Wellenleitstruktur in ein flächiges Substrat eingebracht ist. Auf diese Weise kann die Wellenleitstruktur besonders einfach hergestellt werden.

Der Resonator ist über das evaneszente Feld des linearen Wellenleiters mit dem Wellenleiter gekoppelt. In diesem Fall ist der Resonator zumindest teilweise mit dem Beschichtungsmaterial beschichtet, sodass sich die Resonanzfrequenz ändert, wenn das Beschichtungsmaterial zum Reaktionsprodukt reagiert. Auf diese Weise kann die Verstimmung des Resonators anhand von Licht bestimmt werden, das im linearen Wellenleiter geleitet wird.

Vorzugsweise umfasst der Quecksilberdetektor eine elektrische Auswerteeinheit, die mit dem Detektorelement verbunden ist und ausgebildet ist zum automatischen Durchführen eines Verfahrens mit den Schritten eines Erfassens einer Änderung der Eigenschaft des Lichts und eines Berechnens der Quecksilberkonzentration in der Luft aus der Änderung der Eigenschaft. Beispielsweise ist in der Auswerteeinheit ein Kennfeld hinterlegt, in dem die Abhängigkeit der Änderung der Eigenschaft von der Quecksilberkonzentration niedergelegt ist. In anderen Worten wird vorzugsweise die zeitliche Änderung der Eigenschaft des Lichts gemessen und daraus die Quecksilberkonzentration berechnet. Beispielsweise wird mit dem Detektorelement die Intensität des Lichts in Abhängigkeit von der Zeit gemessen und daraus die Intensitätsänderung und/oder die Änderung der Dämpfung, die das Licht in der Wellenleitstruktur erfährt, bestimmt.

Vorzugsweise sind die Lichtquelle, die Wellenleitstruktur und das Detektorelement auf einer gemeinsamen Platine angeordnet. Auf diese Weise ergibt sich ein kompakter Quecksilberdetektor, der beispielsweise auch in Handgeräten leicht verwendet werden kann.

Vorzugsweise ist die Beschichtung so ausgebildet, dass sich ihre geometrische Struktur bei Reaktion zum Reaktionsprodukt ändert. Beispielsweise ändert sich der mittlere Abstand von Bestandteilen der Beschichtung untereinander. Umfasst die Beschichtung Gold-Nanopartikel, so ändert sich deren mittlerer Abstand, wenn Quecksilber mit den Gold-Nanopartikeln reagiert. Der mittlere Abstand untereinander lässt sich mittels oberflächenverstärkter Infrarotspektroskopie (surface enhanced infrared spectroscopy, SEIRS) ermitteln. Vorzugsweise umfasst das Detektorelement ein SEIRS-Detektorelement, mittels dem der mittlere Abstand oder eine Änderung des mittleren Abstandes von Partikeln des Beschichtungsmaterials bestimmbar ist.

Vorzugsweise weist die Wellenleitstruktur eine Lichtleitfaser auf, auf die die Beschichtung auf die Lichtleitfaser aufgebracht ist. Ein derartiger Sensor ist einfach herzustellen und zudem robust.

Im Folgenden wird die Erfindung anhand der beigefügten Zeichnungen erläutert. Dabei zeigt
- Figur 1: eine schematische Ansicht eines Quecksilber-Detektorelements in einem optischen Quecksilberdetektor gemäß einem ersten Beispiel,

- Figur 2: eine schematische Ansicht eines Quecksilber-Detektorelements in einem optischen Quecksilberdetektor gemäß einem zweiten Beispiel,
- Figur 3: eine schematische Ansicht eines Quecksilber-Detektorelements in einem optischen Quecksilberdetektor gemäß einem dritten Beispiel,
- Figur 4: einen möglichen Verlauf einer Wellenleitstruktur in einem Quecksilber-Detektorelement und
- Figur 5: einen weiteren möglichen Verlauf einer Wellenleitstruktur.

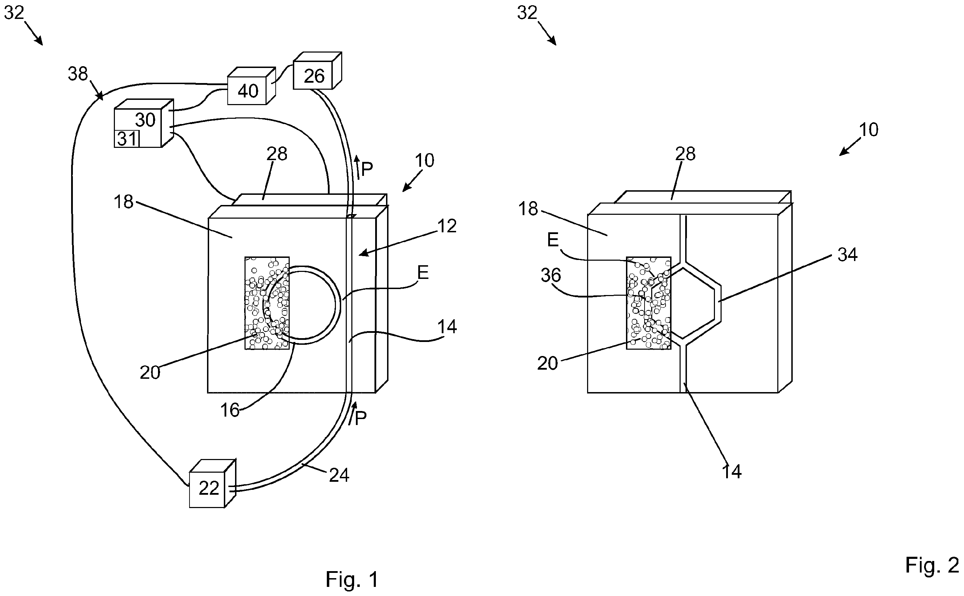

Figur 1 zeigt ein Quecksilber-Detektorelement 10, das eine Wellenleitstruktur 12 aufweist. Die Wellenleitstruktur 12 umfasst einen linearen Wellenleiter 14 und einen Resonator 16, die beide in einem Substrat 18 ausgebildet sind. Dazu wird beispielsweise der Brechungsindex n₁₈ in dem Substrat 18 lokal modifiziert, beispielsweise mittels Laserstrahlen.

In einer Umgebung des Resonators 16 ist eine Beschichtung 20 aus Gold-Nanopartikeln aufgebracht. Der Wellenleiter 14 ist als planar-optischer Wellenleiter ausgebildet, in den Licht einer Lichtquelle 22 in Form eines Lasers eingekoppelt werden kann. Der Wellenleiter 14 kann beispielsweise mittels Lasermaterialbearbeitung, Fotolithographie oder Umformverfahren aus Glas-, Silizium-, Polymersubstraten oder einer Kombination dieser Komponenten hergestellt sein.

Beispielsweise umfasst die Lichtquelle 22 eine Lichtleitfaser 24. Das Licht im Wellenleiter 14 besitzt ein evaneszente Feld E, das in den Resonator 16 einkoppelt. Im Resonator 16 bildet sich für eine vorgegebene Resonanzfrequenz _{f16} eine stehende Welle aus. Die Resonanzfrequenz f₁₆ hängt von der Brechzahl n₂₀ der Beschichtung 20 ab.

In einem Lichtpfad P hinter der Wellenleitstruktur 10 ist ein Detektorelement 26 angeordnet, mittels dem die Resonatorfrequenz f₁₆ bestimmt werden kann. Das Detektorelement 26 bestimmt das Transmissionsspektrum des Lichts, das den Resonator 20 passiert hat.

Flächig mit dem Substrat 18 verbunden ist ein ohmsches Heizelement 28 in Form einer elektrischen Widerstandsschicht, die mit einer Stromquelle 30 zum Bestromen kontaktiert ist. Fließt ein elektrischer Strom von der Stromquelle 30 aus durch das Heizelement 28, so erwärmt diese das Substrat 18 und damit die Beschichtung 20. Auf einer Regenerationstemperatur T_{R} entweicht Quecksilber in die Umgebung, das vorher in einem Reaktionsprodukt des Beschichtungsmaterials enthalten war.

Das Quecksilber-Detektorelement 10, die Lichtquelle 22 und das Detektorelement 26 sind Teil eines Quecksilberdetektors 32.

Figur 2 zeigt ein zweites Beispiel eines Quecksilber-Detektorelements 10, bei dem die Wellenleitstruktur ein Mach-Zehender-Interferometer mit einem ersten Arm 34 und einem zweiten Arm 36 bildet. Lediglich im Bereich des zweiten Arms ist die Beschichtung 20 vorhanden. Kommt die Beschichtung 20 in Kontakt mit Quecksilber, so ändert sich der mittlere Durchmesser der Gold-Nanopartikel, wodurch sich die Permittivität der Beschichtung 20 und damit der Brechungsindex n₂₀ ändert. Dies wiederum verändert die optische Weglänge des zweiten Arms 36, was zu einer sich ändernden Interferenz führt, die vom Detektorelement 26 erfasst wird.

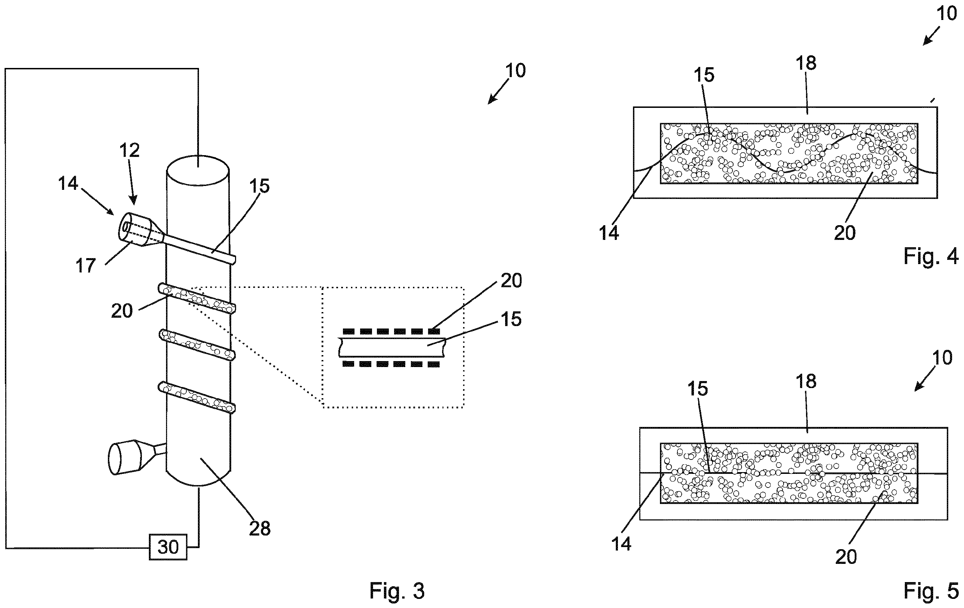

Figur 3 zeigt ein weiteres Beispiel eines Quecksilber-Detektorelements 10, bei der die Wellenleitstruktur 12 einen Wellenleiter 14 in Form einer Wellenleitfaser, im vorliegenden Fall in Form einer Glasfaser, aufweist. In der Vergrößerung ist zu erkennen, dass der Wellenleiter 14 eine Beschichtung 20 aus Gold-Nanopartikeln aufweist. Der Wellenleiter 14 ist um ein stabförmiges Heizelement 28 herum gewunden, das Teil einer Heizvorrichtung 38 ist, zu der neben dem Heizelement 28 zudem die Stromquelle 30 gehört. Die Stromquelle 30 umfasst eine Ansteuereinheit 31, die den elektrischen Widerstand des Heizelements 28 misst, daraus dessen Temperatur bestimmt und auf eine vorgegebene Soll-Temperatur regelt.

Der Wellenleiter 14 in Form der Wellenleitfaser besitzt einen Kern 15, der von einer Umhüllung 17 umgeben ist. Der Kern 15 ist in dem Bereich, in dem die Beschichtung 20 vorliegt, zumindest teilweise freigelegt. Durch das Freilegen des Kerns 15 kann die/ können die Wellenleitermoden mit der Beschichtung 20, die auch als Funktionalisierung bezeichnet werden könnte, wechselwirken. Somit kann beispielsweise durch das zeitliche Monitoring der Oberflächenplasmonenresonanz (SPR) mittels des Detektorelements 26, das an den Wellenleiter 14 angeschlossen, in Figur 3 aber nicht eingezeichnet ist, auf die Quecksilberkonzentration in der Umgebung des Sensors geschlossen werden. Die SPR der Beschichtung 20, der Goldnanopartikel, ändert sich durch Bildung von Amalgam. Neben herkömmlichen optischen Wellenleitfasern auf Glas- oder Polymerbasis können auch optische Mikro- bzw. Nanofasern verwendet werden.

Figur 4 zeigt ein weiteres Beispiel eines Quecksilber-Detektorelements 10, bei dem der Wellenleiter 14 mäandrierend ausgebildet ist. Der Wellenleiter 14 ist mäandrierend auf das flache Heizelement 28 aufgebracht, das in diesem Fall das Substrat 18 bildet. An den Wellenleiter 14 sind die Lichtquelle 22 und am anderen Ende das Detektorelement 26 angeschlossen, das das Transmissions- und/oder das Reflexionsspektrum und/oder die Lichtdämpfung misst.

Figur 5 zeigt ein Beispiel eines Quecksilber-Detektorelements 10, bei dem der Wellenleiter 14 gestreckt verläuft. Das Beispiel gemäß Figur 5 kann auch in Form eines faseroptischen Lang-Periodischen Gitters (LPGs) hergestellt werden, wobei in diesem Fall die Umhüllung mit Gold oder Gold-Nanopartikeln beschichtet wird.

In allen Beispielen ist eine Auswerteeinheit 40 vorhanden, die aber nur in Figur 1 gezeigt und zumindest mit dem Detektorelement 26 verbunden ist. Die Auswerteeinheit 40 erfasst die vom Detektorelement 26 gemessenen Daten und errechnet daraus die Quecksilber-Konzentration in der umgebenden Luft.

### Bezugszeichenliste

- 10: Quecksilber-Detektorelement
- 12: Wellenleitstruktur
- 14: Wellenleiter
- 15: Kern
- 16: Resonator
- 17: Umhüllung
- 18: Substrat

- 20: Beschichtung
- 22: Lichtquelle
- 24: Lichtleitfaser
- 26: Detektorelement
- 28: Heizelement

- 30: Stromquelle
- 32: Quecksilberdetektor
- 34: erster Arm
- 36: zweiter Arm
- 38: Heizvorrichtung
- 40: Auswerteeinheit

- E: evaneszentes Feld
- f₁₆: Resonatorfrequenz
- n: Brechzahl
- P: Lichtpfad
- T_{R}: Regenerationstemperatur

## Patentansprüche

1. Optischer Quecksilberdetektor (32) mit
(a) einer Lichtquelle (22), insbesondere einem Laser, zum Aussenden von Licht,
(b) einer Wellenleitstruktur (12), die mit der Lichtquelle (22) verbunden ist, und
(c) einem Detektorelement (26), das
in einem Lichtpfad (P) hinter der Wellenleitstruktur (12) angeordnet ist und
ausgebildet ist zum Erfassen einer Eigenschaft des Lichts,
(d) wobei die Wellenleitstruktur (12) eine Beschichtung (20) aus einem Beschichtungsmaterial besitzt, das mit Quecksilber zu einem Reaktionsprodukt reagiert,
(e) wobei die Wellenleitstruktur (12) so ausgebildet ist, dass das in der Wellenleitstruktur (12) geleitete Licht sich in der Eigenschaft verändert, wenn das Beschichtungsmaterial zum Reaktionsprodukt reagiert, sodass die vom Detektorelement (26) erfasste Eigenschaft des Lichts von der Menge des Reaktionsprodukts abhängt, und
(f) die Wellenleitstruktur (12) einen linearen Wellenleiter (14) aufweist,
(g) wobei der Quecksilberdetektor (32) eine Heizvorrichtung (38) aufweist, mittels der die Beschichtung (20) auf eine Regenerationstemperatur erwärmbar ist, ab der das Reaktionsprodukt zum Beschichtungsmaterial reagiert
**dadurch gekennzeichnet, dass**
(h) die Wellenleitstruktur (12) einen Resonator (16) aufweist, wobei der Resonator (16) über das evaneszente Feld (E) des linearen Wellenleiters (14) mit dem linearen Wellenleiter (14) gekoppelt ist und wobei der Resonator (16) zumindest teilweise mit dem Beschichtungsmaterial beschichtet ist,
(i) der Wellenleiter (14) der Wellenleitstruktur (12) ein Mach-Zehnder-Interferometer mit einem ersten Arm (34) und einem zweiten Arm (36) bildet, wobei der Resonator (16) sich in der Umgebung des Arms des Mach-Zehnder-Interferometer befindet, in dessen Umgebung das Beschichtungsmaterial (20) angeordnet ist, und dass
(j) das Beschichtungsmaterial Gold in Form von Gold-Nanoantennen umfasst, die so angeordnet sind, dass deren mittlerer Abstand durch Spektroskopie im Infrarotbereich ermittelbar ist, wobei eine Ausdehnung der Gold-Nanoantennen in zwei Raumrichtungen kleiner ist als in der dritten, verbleibenden Raumrichtung.

2. Optischer Quecksilberdetektor nach Anspruch 1, wobei die Ausdehnung der Gold-Nanoantennen in zwei Raumrichtungen um zumindest den Faktor 10 kleiner ist als in der dritten, verbleibenden Raumrichtung.

3. Optischer Quecksilberdetektor nach Anspruch 2, wobei eine Schichtdicke der Beschichtung 5 nm bis 50 nm beträgt.

4. Optischer Quecksilberdetektor nach einem der vorstehenden Ansprüche,
wobei die Heizvorrichtung (38) ein ohmsches Heizelement (28) umfasst, das in thermischem Kontakt mit der Wellenleitstruktur (12) steht.

5. Optischer Quecksilberdetektor nach einem der vorstehenden Ansprüche,
wobei der optische Quecksilberdetektor (32) ein flächiges Substrat umfasst und die Wellenleitstruktur (12) in das flächige Substrat (18) eingebracht ist.

6. Optischer Quecksilberdetektor nach einem der vorstehenden Ansprüche, wobei der optische Quecksilberdetektor (32) eine elektrische Auswerteeinheit (40) aufweist, die mit dem Detektorelement (26) verbunden ist und ausgebildet ist zum automatischen Durchführen eines Verfahrens mit den Schritten:
(i) Erfassen der Eigenschaft des Lichts und/oder einer Änderung der Eigenschaft des Lichts und
(ii) Berechnen einer Quecksilberkonzentration in der Luft aus der Eigenschaft und/oder der Änderung der Eigenschaft.

7. Optischer Quecksilberdetektor nach einem der vorstehenden Ansprüche,
wobei der optische Quecksilberdetektor (32) einen gemeinsamen Chip aufweist, und die Lichtquelle (22), die Wellenleitstruktur (12) und das Detektorelement (26) auf dem gemeinsamen Chip angeordnet sind.

8. Optischer Quecksilberdetektor nach einem der vorstehenden Ansprüche,
wobei die Beschichtung (20) so ausgebildet ist, dass sich ihre geometrische Struktur bei Reaktion zum Reaktionsprodukt ändert und dass das Detektorelement (26) ausgebildet ist zum Erfassen einer Änderung der Eigenschaft des Lichts, die durch die Änderung der geometrischen Struktur bewirkt wird.

9. Quecksilber-Detektorelement für einen optischen Quecksilberdetektor (32) nach einem der vorstehenden Ansprüche, mit
(i) einer Wellenleitstruktur (12), die zum Verbinden mit einer Lichtquelle (22) zum Einkoppeln von Licht verbindbar ist,
(ii) wobei die Wellenleitstruktur (12) eine Beschichtung (20) aus einem Beschichtungsmaterial besitzt, das mit Quecksilber zu einem Reaktionsprodukt reagiert,
(iii) wobei die Wellenleitstruktur (12) so ausgebildet ist, dass sich das in der Wellenleitstruktur (12) geleitete Licht in mindestens einer Eigenschaft verändert, wenn das Beschichtungsmaterial zum Reaktionsprodukt reagiert, und
(iv) die Wellenleitstruktur (12) einen linearen Wellenleiter (14) aufweist,
(v) wobei die Wellenleitstruktur (12) und die Beschichtung (20) so ausgebildet sind, dass die Beschichtung (20) durch Leiten von elektromagnetischer Strahlung durch die Wellenleitstruktur (12) auf eine Regenerationstemperatur (T_{R}) erwärmbar ist, ab der das Reaktionsprodukt zum Beschichtungsmaterial reagiert,
**dadurch gekennzeichnet, dass**
(vi) die Wellenleitstruktur (12) einen Resonator (16) aufweist, wobei der Resonator (16) über das evaneszente Feld (E) des linearen Wellenleiters (14) mit dem linearen Wellenleiter (14) gekoppelt ist und wobei der Resonator (16) zumindest teilweise mit dem Beschichtungsmaterial beschichtet ist, und
(vii) der Wellenleiter (14) der Wellenleitstruktur (12) ein Mach-Zehender-Interferometer mit einem ersten Arm (34) und einem zweiten Arm (36) bildet, wobei der Resonator (16) sich in der Umgebung des Arms des Mach-Zehnder-Interferometer befindet, in dessen Umgebung das Beschichtungsmaterial (20) angeordnet ist, wobei das Beschichtungsmaterial nur in der Umgebung eines der Arme angeordnet ist, und dass
(viii) das Beschichtungsmaterial Gold in Form von Gold-Nanoantennen umfasst, die so angeordnet sind, dass deren mittlerer Abstand durch Spektroskopie im Infrarotbereich ermittelbar ist, wobei eine Ausdehnung der Gold-Nanoantennen in zwei Raumrichtungen kleiner ist als in der dritten, verbleibenden Raumrichtung.

## Claims

1. An optical mercury detector (32) with
(a) a light source (22), in particular a laser, for emitting light,
(b) a waveguide structure (12), which is connected to the source (22), and
(c) a detector element (26), which
is arranged in a light path (P) behind the waveguide structure (12) and
is designed to detect a property of the light,
(d) wherein the waveguide structure (12) has a coating (20) made of a coating material which reacts with mercury to form a reaction product,
(e) wherein the waveguide structure (12) is designed in such a way that light guided in the waveguide structure (12) changes in the property when the coating material reacts to form a reaction product, such that the property of the light detected by the detector element (26) depends on the amount of the reaction product, and
(f) the waveguide structure (12) features a linear waveguide (14),
(g) wherein the mercury detector (32) comprises a heating device (38) by means of which the coating (20) can be heated to a regeneration temperature above which the reaction product reacts to form the coating material,
**characterized in that**
(h) the waveguide structure (12) comprises a resonator (16), wherein the resonator (16) is coupled with the linear waveguide (14) via the evanescent field (E) of the linear waveguide (14) and wherein the resonator (16) is at least partially coated with the coating material,
(i) the waveguide (14) of the waveguide structure (12) forms a Mach-Zehnder interferometer with a first arm (34) and a second arm (36), wherein the resonator (16) is situated in the vicinity of the arm of the Mach-Zehnder interferometer in whose vicinity the coating material (20) is arranged, and that
(j) the coating material comprises gold in the form of gold nanoantennas arranged in such a way that their average spacing can be determined by spectroscopy in the infrared range, wherein an extension of the gold nanoantennas in two spatial directions is smaller than in the third, remaining spatial direction.

2. The optical mercury detector according to claim 1, wherein the extension of the gold nanoantennas in two spatial directions is smaller than the third, remaining spatial direction by a factor of at least 10.

3. The optical mercury detector according to claim 2, wherein a layer thickness of the coating is 5 nm to 50 nm.

4. The optical mercury detector according to one of the preceding claims, wherein the heating device (38) comprises an ohmic heating element (28) which is in thermal contact with the waveguide structure (12).

5. The optical mercury detector according to one of the preceding claims, wherein the optical mercury detector (32) comprises a flat substrate and the waveguide structure (12) is introduced into the flat substrate (18).

6. The optical mercury detector according to one of the preceding claims, wherein the optical mercury detector (32) comprises an electric evaluation unit (40) that is connected to the detector element (26) and designed to automatically carry out a method featuring the steps:
(i) detection of the property of the light and/or a change in the property of the light, and
(ii) calculation of a mercury concentration in the air from the property and/or a change in the property.

7. The optical mercury detector according to one of the preceding claims, wherein the optical mercury detector (32) has a common chip, and the light source (22), the waveguide structure (12) and the detector element (26) are arranged on the common chip.

8. The optical mercury detector according to one of the preceding claims, wherein the coating (20) is designed in such a way that its geometric structure changes upon the reaction to form a reaction product, and that the detector element (26) is designed to detect a change in the property of the light that is caused by the change in the geometric structure.

9. An optical mercury detector element for an optical mercury detector (32) according to one of the preceding claims with
(i) a waveguide structure (12) which can be connected to a light source (22) for coupling in light,
(ii) wherein the waveguide structure (12) has a coating (20) made of a coating material which reacts with mercury to form a reaction product,
(iii) wherein the waveguide structure (12) is designed in such a way that the light guided in the waveguide structure (12) changes in at least one property when the coating material reacts to form the reaction product, and
(iv) the waveguide structure (12) features a linear waveguide (14),
(v) wherein the waveguide structure (12) and the coating (20) are designed in such a way that the coating (20) can be heated by passing electromagnetic radiation through the waveguide structure (12) to a regeneration temperature (T_{R}) above which the reaction product reacts to form the coating material,
**characterized in that**
(vi) the waveguide structure (12) comprises a resonator (16), wherein the resonator (16) is coupled with the linear waveguide (14) via the evanescent field (E) of the linear waveguide (14) and wherein the resonator (16) is at least partially coated with the coating material, and
(vii) the waveguide (14) of the waveguide structure (12) forms a Mach-Zehnder interferometer with a first arm (34) and a second arm (36), wherein the resonator (16) is situated in the vicinity of the arm of the Mach-Zehnder interferometer in whose vicinity the coating material (20) is arranged, the coating material only being arranged in the vicinity of one of the arms, and that
(viii) the coating material comprises gold in the form of gold nanoantennas which are arranged in such a way that their average spacing can be determined by spectroscopy in the infrared range, wherein an extension of the gold nanoantennas in two spatial directions is smaller than in the third, remaining spatial direction.

## Revendications

1. Détecteur optique de mercure (32), comportant
(a) une source de lumière (22), en particulier un laser, pour émettre de la lumière,
(b) une structure de guide d'ondes (12) reliée à la source de lumière (22), et
(c) un élément détecteur (26), qui
est disposé dans un trajet de lumière (P) en arrière de la structure de guide d'ondes (12), et qui
est réalisé pour détecter une caractéristique de la lumière,
(d) la structure de guide d'ondes (12) ayant un revêtement (20) en un matériau de revêtement qui réagit avec le mercure pour donner un produit de réaction,
(e) la structure de guide d'ondes (12) étant réalisée de telle sorte que la lumière guidée dans la structure de guide d'ondes (12) change de caractéristique lorsque le matériau de revêtement réagit pour donner le produit de réaction, de telle sorte que la caractéristique de la lumière détectée par l'élément détecteur (26) dépend de la quantité du produit de réaction, et
(f) la structure de guide d'ondes (12) comprenant un guide d'ondes linéaire (14),
(g) le détecteur de mercure (32) comprenant un dispositif de chauffage (38) permettant de chauffer le revêtement (20) à une température de régénération à partir de laquelle le produit de réaction réagit pour donner le matériau de revêtement,
**caractérisé en ce que**
(h) la structure de guide d'ondes (12) comprend un résonateur (16), le résonateur (16) étant couplé au guide d'ondes linéaire (14) via le champ évanescent (E) du guide d'ondes linéaire (14), et le résonateur (16) étant revêtu au moins partiellement du matériau de revêtement,
(i) le guide d'ondes (14) de la structure de guide d'ondes (12) forme un interféromètre de Mach-Zehnder ayant un premier bras (34) et un second bras (36), le résonateur (16) se trouvant à proximité du bras de l'interféromètre de Mach-Zehnder à proximité duquel est disposé le matériau de revêtement (20), et **en ce que**
(j) le matériau de revêtement contient de l'or sous forme de nano-antennes en or qui sont disposées de telle sorte que leur distance moyenne peut être déterminée par spectroscopie dans la plage infrarouge, une extension des nano-antennes en or dans deux directions spatiales étant inférieure à celle dans la troisième direction spatiale restante.

2. Détecteur optique de mercure selon la revendication 1,
dans lequel l'extension des nano-antennes en or dans deux directions spatiales est inférieure au moins du facteur 10 à celle dans la troisième direction spatiale restante.

3. Détecteur optique de mercure selon la revendication 2,
dans lequel
une épaisseur de couche du revêtement est de 5 nm à 50 nm.

4. Détecteur optique de mercure selon l'une des revendications précédentes,
dans lequel le dispositif de chauffage (38) comprend un élément chauffant ohmique (28) en contact thermique avec la structure de guide d'ondes (12).

5. Détecteur optique de mercure selon l'une des revendications précédentes,
dans lequel le détecteur optique de mercure (32) comprend un substrat surfacique, et la structure de guide d'ondes (12) est intégrée dans le substrat surfacique (18).

6. Détecteur optique de mercure selon l'une des revendications précédentes,
dans lequel
le détecteur optique de mercure (32) comprend une unité d'évaluation électrique (40) qui est connectée à l'élément détecteur (26) et qui est réalisée pour automatiquement mettre en oeuvre un procédé comprenant les étapes consistant à :
(i) détecter la caractéristique de la lumière et/ou un changement dans la caractéristique de la lumière, et
(ii) calculer une concentration de mercure dans l'air à partir de la caractéristique et/ou du changement de la caractéristique.

7. Détecteur optique de mercure selon l'une des revendications précédentes,
dans lequel le détecteur optique de mercure (32) comprend une puce commune, et la source de lumière (22), la structure de guide d'ondes (12) et l'élément détecteur (26) sont disposés sur la puce commune.

8. Détecteur optique de mercure selon l'une des revendications précédentes,
dans lequel le revêtement (20) est réalisé de telle sorte que sa structure géométrique change lors de la réaction pour donner le produit de réaction, et l'élément détecteur (26) est réalisé pour détecter un changement de la caractéristique de la lumière causé par le changement de la structure géométrique.

9. Élément détecteur de mercure pour un détecteur optique de mercure (32) selon l'une des revendications précédentes, comportant
(i) une structure de guide d'ondes (12) qui peut être connectée à une source de lumière (22) pour injecter de la lumière,
(ii) la structure de guide d'ondes (12) comprenant un revêtement (20) en un matériau de revêtement qui réagit avec le mercure pour donner un produit de réaction,
(iii) la structure de guide d'ondes (12) étant réalisée de telle sorte que la lumière guidée dans la structure de guide d'ondes (12) change dans au moins une caractéristique lorsque le matériau de revêtement réagit pour donner le produit de réaction, et
(iv) la structure de guide d'ondes (12) comprenant un guide d'ondes linéaire (14),
(v) la structure de guide d'ondes (12) et le revêtement (20) étant réalisés de telle sorte qu'en faisant passer un rayonnement électromagnétique à travers la structure de guide d'ondes (12), le revêtement (20) peut être chauffé à une température de régénération (T_{R}) à partir de laquelle le produit de réaction réagit pour donner le matériau de revêtement, **caractérisé en ce que**
(vi) la structure de guide d'ondes (12) comprend un résonateur (16), le résonateur (16) étant couplé au guide d'ondes linéaire (14) via le champ évanescent (E) du guide d'ondes linéaire (14), et le résonateur (16) étant revêtu au moins partiellement du matériau de revêtement, et
(vii) le guide d'ondes (14) de la structure de guide d'ondes (12) forme un interféromètre de Mach-Zehnder ayant un premier bras (34) et un second bras (36), le résonateur (16) se trouvant à proximité du bras de l'interféromètre de Mach-Zehnder à proximité duquel est disposé le matériau de revêtement (20), le matériau de revêtement n'étant disposé qu'à proximité de l'un des bras, et **en ce que**
(viii) le matériau de revêtement contient de l'or sous forme de nano-antennes en or qui sont disposées de telle sorte que leur distance moyenne peut être déterminée par spectroscopie dans la plage infrarouge, une extension des nano-antennes en or dans deux directions spatiales étant inférieure à celle dans la troisième direction spatiale restante.
